# EUROPÄISCHE PATENTSCHRIFT

(11) **EP 0 374 565 B1**
(45) Veröffentlichungstag und Bekanntmachung des Hinweises auf die Patenterteilung: **16.06.1993**
(21) Anmeldenummer: 89122325.7
(22) Anmeldetag: 04.12.1989
(51) Int. Cl.: G02B 5/20

(54) **Verlauffilter**
Graded filter
Filtre dégradé

(30) Priorität: 22.12.1988 CH 4746/88
(43) Veröffentlichungstag der Anmeldung: 27.06.1990
(73) Patentinhaber: Oerlikon-Contraves AG, 8052 Zürich (CH)
(72) Erfinder: Sanvido, Saverio, CH-8152 Glattbrugg (CH); Marquis, Gérard, CH-8046 Zürich (CH)

(56) Entgegenhaltungen:
- DE-A- 2 246 270
- GB-A- 2 074 339
- US-A- 4 443 696
- US-A- 4 778 263

## Beschreibung

Die Erfindung betrifft ein optisches System mit einen Verlauffilter mit drehbaren, in einer optischen Achse angeordneten Filterscheiben, die über ein Getriebe gemeinsam angetrieben sind, und deren Drehachsen die optische Achse auf beiden Seiten kreuzen.

Verlauffilter sind ein Bestandteil der stufenlosen, automatischen Helligkeitsregulierung in optischen Systemen, namentlich in Aufnahmekameras. Sie bestehen aus planparallelen, lichtdurchlässigen Scheiben, die in den afokalen Strahlengang hineinragen, mit über den Umfang variabler Beschichtung, derart, dass sich mit dem Drehen der Scheiben die Transmission kontinuierlich verändert. Um Reflexionen im Strahlengang zu vermeiden, muss die Orthogonale zur Scheibe mit der optischen Achse einen Winkel von ca. 5° einschliessen. Um die daraus resultierende Strahlableitung zu kompensieren, werden zwei gegeneinander schräggestellte Scheiben verwendet. Bei bekannten Verlauffiltern dieser Art werden die Filterscheiben über ein Zahnradgetriebe angetrieben. Dies hat mehrere Nachteile zugleich. Ein Nachteil besteht darin, dass die Zahnräder einem Verschleiss unterliegen, da sie häufig in Bewegung sein müssen und zwar wechselweise in beiden Drehrichtungen. Ihre Herstellung ist zudem teuer, da sie mit hoher Präzision bearbeitet werden müssen, um Totzonen und Zittern zu vermeiden. Bei Verwendung des Verlauffilters in Luftfahrzeugen, insbesondere in Raumfahrzeugen und in Systemen, die schnelle Beobachtungsbewegungen ausführen, spielt auch das Gewicht des Getriebes eine Rolle. Aber vor allen Dingen ist der Verlauffilter Teil eines optischen Systems; eine in der Regel unumgängliche Schmierung der Zahnräder ist eine ständige Quelle von möglichen Verschmutzungen der empfindlichen optischen Teile und damit entsprechend problematisch. Ausserdem muss der Verlauffilter bis minus 40 Grad Celsius einsatzfähig sein, was die Auswahl geeigneter Materialien und Schmiermittel einschränkt und diese verteuert.

Der Erfindung liegt die Aufgabe zugrunde, einen Verlauffilter der eingangs definierten Art zu schaffen, der kein Zahnradgetriebe aufweist und damit der oben geschilderten Mängel ledig ist.

Diese Aufgabe ist erfindungsgemäss durch die im Kennzeichen des Anspruchs 1 angegebenen Merkmale gelöst. Die Unteransprüche betreffen vorteilhafte Weiterbildungen.

Ein Ausführungsbeispiel des Erfindungsgegenstandes ist nachfolgend anhand von Zeichnungen beschrieben. Es ist:
- Fig.1: die Draufsicht des Verlauffilters gemäss der Erfindung;
- Fig.2: die Ansicht in Richtung der Pfeile I-I gemäss Fig.1;
- Fig.3: der Querschnitt entlang einer Linie B-B in Fig.2;
- Fig.4: der Querschnitt entlang einer Linie A-A in Fig.2;
- Fig.5: die Ansicht in Richtung der Pfeile II-II gemäss Fig.1;
- Fig.6: ein Detail zur Darstellung eines Fehlbetriebes;
- Fig.7: eine schematische Darstellung des Verlauffilters aus schräger Sicht, betrachtet in der Richtung des Pfeiles III in Fig.1;
- Fig.8: der eine Zahnriementrieb von beiden in schräger Darstellung, mit zur Verdeutlichung übertrieben grossen Winkeln zwischen den Achsen.

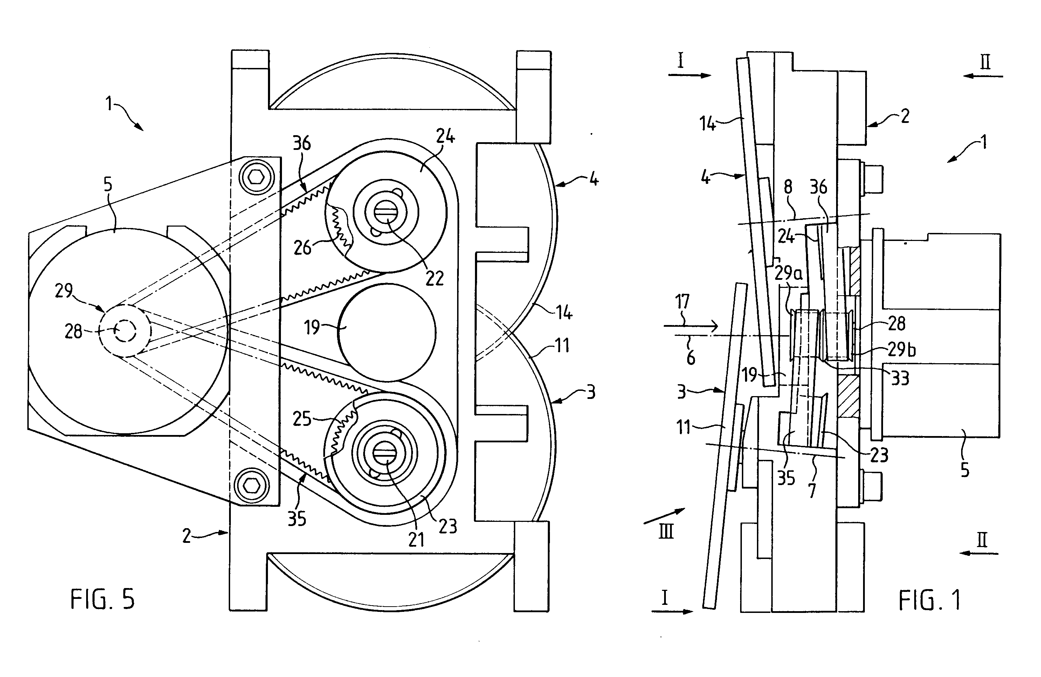

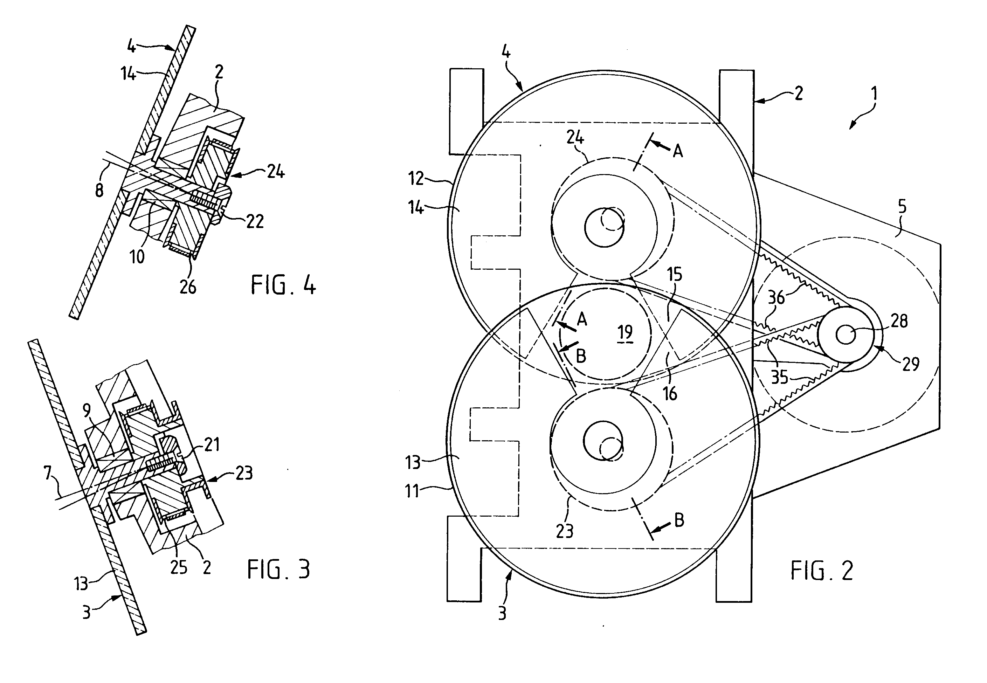

Der Verlauffilter 1 nach den Figuren 1 bis 5 gesteht im wesentlichen aus einer Grundplatte 2, die zwei Filterscheiben 3 und 4 trägt und einen gemeinsamen Antriebsmotor 5 für beide Filterscheiben. Die Filterscheiben 3 und 4, die in der optischen Achse 6 des Verlauffilters angeordnet sind, sind auf Drehachsen 7 bzw. 8 befestigt, die je in einem Lager 9 bzw. 10 in der Grundplatte 2 geführt sind. Die Filterscheiben 3 und 4 bestehen aus einer Glasscheibe 11 bzw. 12, die auf einer Seite mit einer tangential kontinuierlich abnehmend teillichtdurchlässigen Schicht 13 bzw. 14 beschichtet ist, mit der Ausnahme eines Sektors 15 bzw. 16, der nicht beschichtet ist. Ein optischer Strahl 17, der von einem beobachteten Objekt in der Umgebung den Verlauffilter erreicht, gelangt nach Durchlaufen der Filterscheiben 3 und 4 durch eine Bohrung 19 in der Grundplatte 2 in ein nachgeschaltetes (nicht gezeichnetes) Gerät des optisches Systems, z.B. eine Fernsehkamera. Durch Drehung der Filterscheiben wird das durchfallende Licht in definierter Weise stetig in der Intensität abgeschwächt, so dass das optische System kontinuierlich den veränderlichen Lichtverhältnissen des Objekts und seiner Umgebumg angepasst wird.

Auf den Drehachsen 7 und 8 der Filterscheiben ist mit einer Schraube 21 bzw. 22 eine Zahnriemenscheibe 23 bzw. 24 befestigt, deren Laufflächen 25 bzw. 26 gezahnt sind. Die Antriebswelle 28 des Motors 5 ist mit einer Doppel-Zahnriemenscheibe 29 versehen, deren Laufflächen ebenfalls verzahnt sind. Die gemeinsame Flanke der Riemenscheibe 29 ist mit 33 bezeichnet. Das Kraftübertragungsglied zwischen dem Antriebsmotor 5 und der jeweiligen Filterscheibe 3 bzw. 4 ist erfindungsgemäss ein Endloszugtriebmittel. Das Endloszuglied besteht in den Figuren aus einem Zahnriemen 35 bzw. 36. Der Zahnriemen 35 umschlingt die Teilriemenscheibe 29a der Doppelriemenscheibe 29 der Antriebswelle 28 und die Riemenscheibe 23 auf der Achse 7 der Filterscheibe 3. Der Zahnriemen 36 umschlingt die Teilriemenscheibe 29b der Doppelriemenscheibe 29 und die Riemenscheibe 24 auf der Achse 8 der Filterscheibe 4.

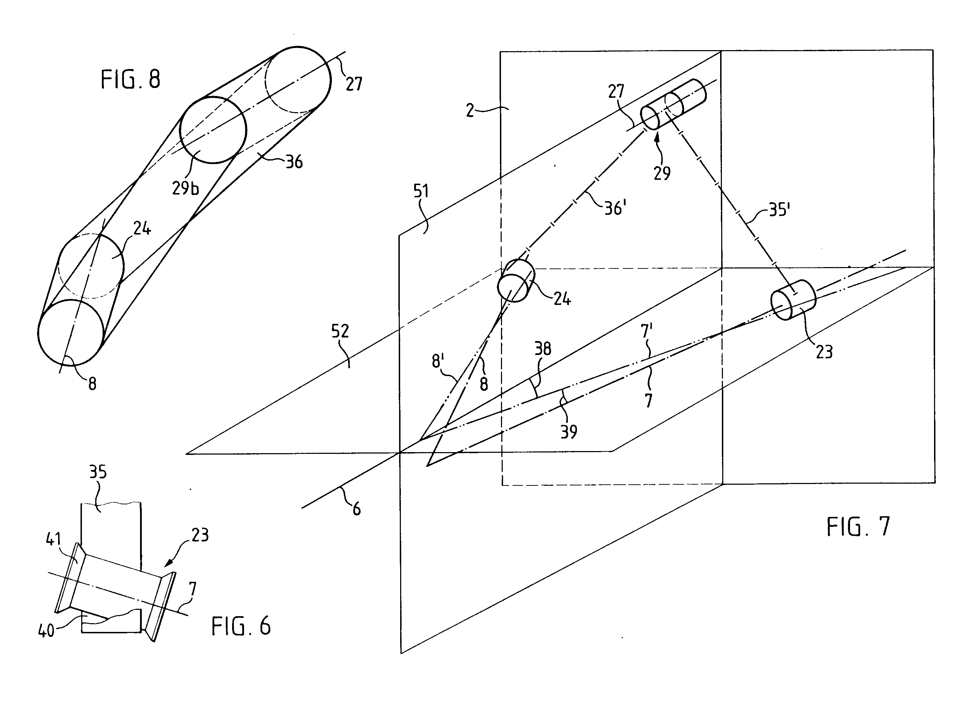

Im Zusammenhang mit dem an den Filterscheiben reflektierten Teil des auffallenden Lichts, den es ausserhalb des optischen Systems zu halten gilt, sind die Lager der Drehachsen eines Verlauffilters immer geneigt eingebaut, so dass die Filterscheiben in Bezug auf die Richtung des eintretenden Lichtes nicht orthogonal dazu sondern ebenfalls geneigt sind. Dies hat zur Folge, dass die Zahnriemen 35 und 36 ohne besonder Massnahmen nicht satt an den Laufflächen 25 bzw. 26 der Riemenscheiben 23 bzw. 24 anliegen, sondern an jener Stelle eine Lücke zwischen beiden klaffen würde. Fig.6 zeigt stark übertrieben eine derartige Lücke 40 zwischen der Lauffläche 25 der Riemenscheibe 23 und dem Zahnriemen 35. Dies würde das reibungslose Funktionieren erheblich beeinträchtigen und einen einseitigen Verschleiss dieser Teile und besonders der betreffenden Flanken 41 und 42 der Riemenscheiben durch ungleichmässige Belastung verursachen. Um dies zu vermeiden, sind die Drehachsen der Filterscheiben erfindungsgemäss so gegeneinander verschwenkt, dass die Zahnriemen satt an den Laufflächen der Riemenscheiben anliegen.

Dies wird nachfolgend anhand von Fig.7, einer räumlichen Darstellung eines orthogonalen Koordinatensystems, erklärt. In der Figur sind alle konstruktiven Einzelheiten des Verlauffilters der besseren Verdeutlichung wegen weggelassen.

Die optische Achse 6 des Verlauffilters und die parallel dazu verlaufende Achse 27 der Antriebswelle 28 bestimmen die Ebene 51. Dazu orthogonal und ebenfalls die optische Achse 6 enthaltend steht die Ebene 52. Der Zahnriemen, schematisiert durch die gestrichelte Linie 35' bzw. 36' muss, bedingt durch die anzustrebende kompakte Bauweise, im wesentlichen parallel zur Grundplatte 2 verlaufen, welche ihrerseits im wesentlichen senkrecht zu den beiden genannten Ebenen verläuft. Bei den gemäss dem Stand der Technik üblichen Anordnungen der Filterscheiben 3 und 4 liegen deren Drehachsen, in der Figur mit 7' bzw. 8' angedeutet, in der Ebene 52 und schliessen mit der optischen Achse einen Winkel 38 von z.B. 5° ein. Dabei ist aber der Punkt des kürzesten Abstandes zwischen der Antriebsachse 27 und den Abtriebsachsen 7',8' auf letzteren von der Grundplatte 2 weg nach vorn, d.h. gegen den Schnittpunkt der Achsen 7' und 8' hin verlegt. Eine korrekte Führung der Zahnriemen ergibt sich, wenn die Zahnriemenscheiben 23,24,29 auf ihren Achsen 7,8,27 auf dem Punkt des kürzesten Abstandes zur korrespondierenden Achse plaziert sind. Ein Verschieben der Zahnriemenscheiben entlang der Achsen ist nicht möglich, weil sie dann in den Strahlengang reichen würden. Soll der kürzeste Abstand 27 der Antriebswelle 28 und der Drehachse 7 der Filterscheibe 3 bzw. der Drehachse 8 der Filterscheibe 4 im wesentlichen in der Ebene parallel zur Grundplatte durch den Doppelzahnriementrieb 29 verlaufen, so müssen die Achsen 7' bzw. 8' zusätzlich um einen Winkel 39, der um mehr als eine Grössenordnung kleiner ist als der Winkel 38, z.B. 0,15°, nach vorne unten geneigt werden. Der dadurch resultierende Strahlversatz ist vernachlässigbar klein.

Schematisch und in den Verhältnissen stark übertrieben gezeichnet zeigt Fig. 8, wie dank Neigen der gegenüber der Achse 27 verdrehten Achse 8 der Zahnriemen 36 wieder satt an beiden Riemenscheiben 29b und 24 anliegt.

Obschon die Erfindung vorstehend für einen Zahnriemen als Endloszugglied beschrieben ist, ist selbstverständlich auch ein Zugglied anderer Form verwendbar, z.B. eine Kugelschnur oder eine Kette, kurz, jedes Endloszugmittel, welches die geforderte Verdrehung zulässt, ohne in der Funktion als lagegenaues Kraftübertragungsmittel behindert zu werden.

## Patentansprüche

1. Optisches System mit einen Verlauffilter mit drehbaren, in der optischen Achse (6) des optischen Systems angeordneten Filterscheiben (3,4), die über ein Getriebe von einem einzigen Motor (5) angetrieben sind, und deren Drehachsen (7,8) sich schneiden, dadurch gekennzeichnet, dass das Getriebe aus einem formschlüssigen Endloszuggliedtrieb (29,35,36,23,24) für jede Filterscheibe (3,4) besteht, dessen Zugglied (35,36) zumindest in einer Querrichtung zur Laufrichtung stark und in der anderen zumindest teilweise verformbar ist, und dass die Ebene der Drehachsen (7,8) der Filterscheiben die Richtung der optischen Achse (6) nicht enthält.

2. Optisches System nach Anspruch 1, dadurch gekennzeichnet, dass die Drehachsen (7,8) der Filterscheiben gegenüber der Antriebsachse (27) derart geneigt sind, dass die Punkte des kürzesten Abstandes zwischen den Drehachsen (7,8) und der Antriebsachse (27) im wesentlichen in einer Orthogonalebene zur Antriebsachse (27) liegen.

3. Optisches System nach Anspruch 1 oder 2, dadurch gekennzeichnet, dass das Zugglied ein Zahnriemen (35,36) ist.

4. Optisches System nach Anspruch 1 oder 2, dadurch gekennzeichnet, dass das Zugglied eine Schnur mit äquidistanten Formschlusskörpern ist.

5. Optisches System nach einem der Ansprüche 1 bis 4, dadurch gekennzeichnet, dass das Zugglied eine Kugelschnur ist.

## Claims

1. Optical system comprising a graded filter with filter plates (3, 4), which are rotatable and arranged in the optical axis (6) of the optical system and mutually driving via a gearing by a single motor (5) and the rotary axes (7, 8) of which intersect, **characterised in that** the gearing comprises a flush continuous pulling element drive (29, 35, 36, 23, 24) for each filter plate (3, 4), the pulling element (35, 36) of which is heavily deformable at least in one transverse direction relative to the running direction, and at least partially deformable in the other, and that the plane of the rotary axes (7, 8) of the filter plates does not include the direction of the optical axes (6).

2. Optical system according to claim 1, **characterised in that** the rotary axes (7, 8) of the filter plates are slanted relative to the drive axis (27) in such a manner that the points of the shortest distance between the rotary axes (7, 8) and the drive axis (27) are substantially in an orthogonal plane to the drive axis (27).

3. Optical system according to claim 1 or 2, **characterised in that** the pulling element is a cogged belt (35, 36).

4. Optical system according to claim 1 or 2, **characterised in that** the pulling element is a cord with equidistant locking bodies.

5. Optical system according to one of claims 1 to 4, **characterised in that** the pulling element is a copula string.

## Revendications

1. Système optique avec un filtre de fondu comportant des disques de filtre (3, 4) montés dans l'axe optique (6) du système optique, ces disques étant entraînés par une transmission à partir d'un seul moteur (5) et leurs axes de rotation (7, 8) se coupent, système optique caractérisé en ce que la transmission est constituée par un moyen d'entraînement sans fin, à liaison de forme (29, 35, 36, 23, 24) pour chaque disque de filtre (3, 4) et son organe de traction (35, 36) est déformable fortement au moins dans une direction transversale par rapport à la direction de défilement, alors que dans l'autre direction il est au moins partiellement déformable et en ce que les plans des axes de rotation (7, 8) des disques de filtre ne passent pas par la direction de l'axe optique (6).

2. Système optique selon la revendication 1, caractérisé en ce que les axes de rotation (7, 8) des disques de filtre sont inclinés par rapport à l'axe d'entraînement (27) de façon que les points de distance la plus courte entre ces axes de rotation (7, 8) et l'axe d'entraînement (27) sont situés principalement dans un plan orthogonal à l'axe d'entraînement (27).

3. Système optique selon la revendication 1 ou 2, caractérisé en ce que le moyen de traction est une courroie crantée (35, 36).

4. Système optique selon la revendication 1 ou 2, caractérisé en ce que le moyen de traction est un cordon avec des organes de liaison de forme, répartis de manière équidistante.

5. Système optique selon l'une des revendications 1 à 4, caractérisé en ce que l'organe de traction est un cordon à bille.
